# DEMANDE DE BREVET EUROPEEN

(11) **EP 2 326 026 A1**
(43) Date de publication de la demande: **25.05.2011**
(21) Numéro de dépôt: 09176548.7
(22) Date de dépôt: 19.11.2009
(51) Int. Cl.: H04B 3/54, H04B 3/56

(54) **Système à courants porteurs en ligne à bus d'énergie à courant continu.**

(71) Demandeur: Thales, 92200 Neuilly Sur Seine (FR)
(72) Inventeur: Fossion, Marc, 5140, Ligny (BE); Sartenaer, Thierry, 5140, Tongrinne (BE)
(74) Mandataire: Esselin, Sophie

(57) **Abrégé**

Système à courants porteurs en ligne à bus d'énergie à courant continu (BECC), comprenant :
- une source d'alimentation en énergie (SAE);
- un moyen capacitif de lissage (MCL) de la tension électrique délivrée par ladite source (SAE) audit bus (BECC);
- au moins un boîtier de distribution (BD₁) alimenté par ledit bus (BECC) et dédié à au moins un équipement (EQT₁, EQT₂); et
- un coupleur en courant électrique (CCE) de signaux de hautes fréquences porteurs de données et un modem de données (MDM), liés audit boîtier de distribution (BD₁) et à au moins une ligne d'alimentation respective d'un équipement (EQT₁, EQT₂).

## Description

L'invention porte sur un système à courants porteurs en ligne ou CPL à bus d'énergie à courant continu.

Le terme Courants Porteurs en Ligne ou CPL réfère à une technologie permettant le transfert d'informations numériques en passant par une ligne de distribution d'énergie électrique. En particulier, la technologie CPL est couramment utilisée sur le réseau terrestre à basse tension (courant alternatif à 50 Hz ou 60 Hz). Aussi, elle constitue une alternative aux traditionnels câbles et à la technologie Wi-Fi.

Les courants porteurs étaient déjà utilisés sur le réseau terrestre pour des applications à bas débit industrielles ou de domotique. Ce n'est que depuis le début des années 2000 et la généralisation du tout-numérique qu'ils sont utilisés par le grand public.

Dans le cadre des applications terrestres, le principe des courants porteurs en ligne consiste à superposer au courant électrique de 50 ou 60 Hz d'alimentation classique, un signal à plus haute fréquence et de faible énergie. Ce deuxième signal se propage sur l'installation électrique et peut être reçu et décodé à distance. Ainsi le signal CPL est reçu par tout récepteur CPL qui se trouve sur le même réseau électrique.

On classe traditionnellement les CPL terrestres en deux catégories en fonction du débit offert. Les CPL à haut débit utilisent des fréquences dans la bande de fréquences de 1,6 à 30 MHz (bande HF allant de 3 à 30 MHz), et les CPL à bas débit utilisent des fréquences dans la bande de fréquences de 9 à 150 kHz en Europe et de 150 à 450 kHz aux États-Unis.

En haut comme en bas débit, la communication est soumise aux bruits et aux atténuations. Il est donc nécessaire de mettre en oeuvre de la redondance, par exemple sous la forme de codes correcteurs d'erreurs. Un coupleur intégré en entrée des récepteurs CPL élimine les composantes basses fréquences avant le traitement du signal. Le modem transforme un flux de bits en signal analogique pour l'émission et inversement en réception, celui-ci inclut les fonctions d'ajout de la redondance et de reconstitution du flux de bits original ou correction d'erreur.

De manière similaire aux CPL fonctionnant sur le réseau terrestre, des applications voient le jour à bord de tous types de véhicules, tels les automobiles, camions, trains, bateaux, avions, ou satellites. Le principe reste identique : les câbles initialement destinés à la distribution d'énergie électrique à bord du véhicule sont réutilisés pour transmettre des signaux de communication à plus haute fréquence. En fonction du type de véhicule concerné, il est possible d'utiliser des alimentations électriques à courant alternatif (AC), ou à courant continu (DC).

La présente invention vise particulièrement les applications CPL à bord des satellites (domaine spatial), des lanceurs (domaine aérospatial), et des avions (domaine aéronautique). Dans ces domaines, la masse et l'encombrement engendrés par le câblage à bord des aéronefs/astronefs représentent un coût important qu'il convient de limiter autant que possible. La technologie CPL, qui permet de faire coexister énergie et données sur le même harnais, représente donc un potentiel élevé d'économie.

Toutefois, l'invention peut également s'appliquer à tout type de véhicule terrestre ou naval, tels un bateau, un train, une automobile, ou un camion.

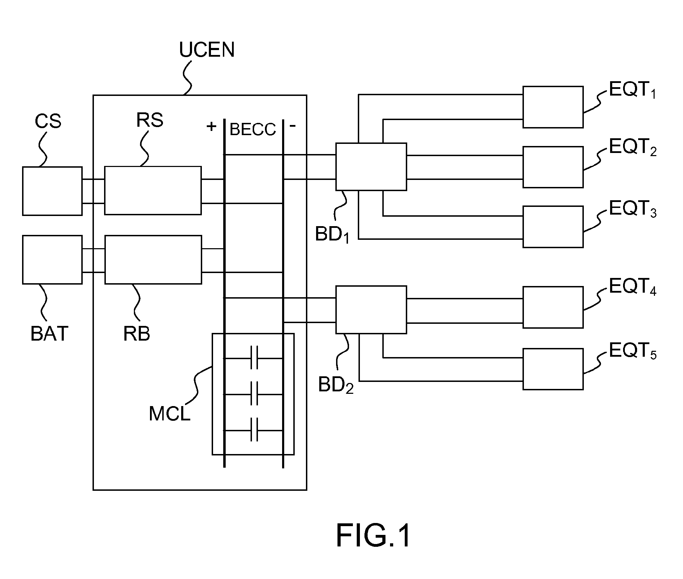

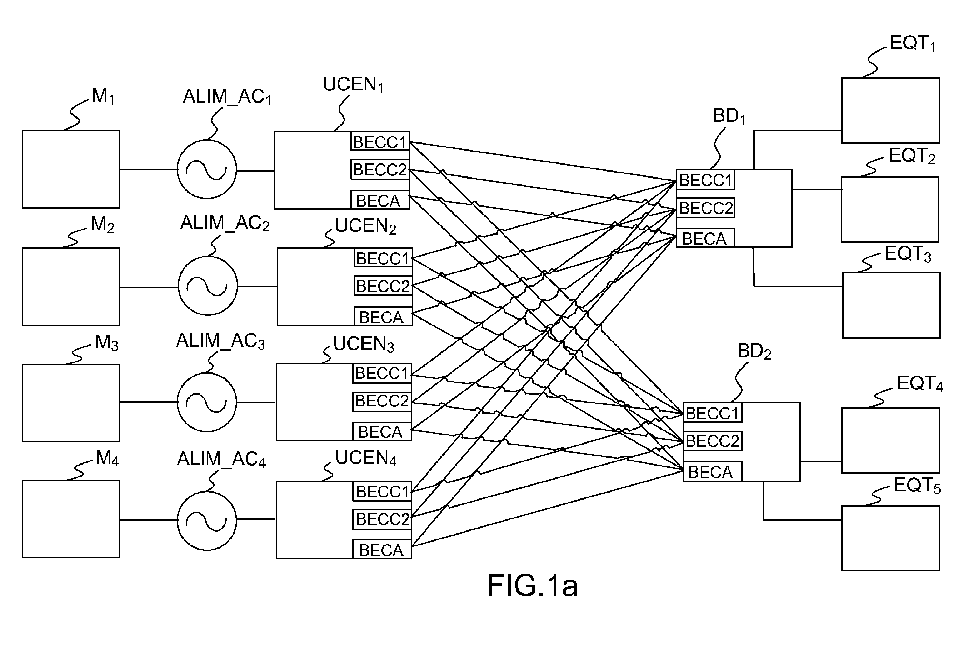

La figure 1 illustre un exemple classique d'architecture de réseau d'alimentation en énergie électrique d'un satellite.

Cette architecture comprend une unité de conditionnement d'énergie UCEN, qui agit comme un noeud central dans le système d'alimentation en énergie du satellite. L'unité de conditionnement d'énergie UCEN comprend un ensemble de régulation solaire RS qui s'interface avec le capteur solaire CS pour réguler la tension continue produite sur le bus d'énergie à courant continu BECC. L'unité de conditionnement d'énergie UCEN comprend également un ensemble de régulation RB de la batterie BAT qui contrôle la recharge de la batterie BAT et les processus de déchargement.

Un module capacitif de lissage MCL de la tension électrique délivrée au bus d'énergie, ou bus d'alimentation, à courant continu BECC, est réalisé dans l'unité de conditionnement d'énergie UCEN pour que la tension continue sur le bus d'énergie à courant continu BECC reste stable dans le cas de phases transitoires de courant élevé induit par le comportement de charge utile variable. La tension continue fournie sur le bus d'énergie BECC peut, par exemple, valoir 28V, 50V ou 100V, selon le type de satellite et son architecture.

Une pluralité d'unités de distribution électrique ou boîtiers de distribution BDi sont connectées à l'unité de conditionnement d'énergie UCEN. Leur rôle est de fournir de l'énergie, à travers un certain nombre de circuits séparés pour les différents équipements EQTi, ou charges utiles, situés dans le voisinage du boîtier de distribution BDi. Le boîtier de distribution BDi prévoit la protection des circuits individuels par des fusibles, ainsi que des dispositifs de surveillance de la consommation électrique.

D'un boîtier de distribution BDi, des câbles de puissance fournissent la tension continue pour des équipements distants EQTi. Généralement, les câbles de puissance sont constitués d'une paire de fils de cuivre torsadés. Dans certains cas, les câbles de puissance ne sont constitués que d'un seul conducteur, le retour du courant se faisant alors via le châssis du satellite. Dans des satellites de petite taille, l'unité de conditionnement d'énergie UCEN et les boîtiers de distribution BDi sont regroupés en un même équipement.

La figure 1a illustre un exemple classique d'architecture de réseau d'alimentation en énergie électrique d'un avion, en l'espèce d'un avion muni de quatre moteurs M1, M2, M3, et M4.

Chacun des moteurs M1, M2, M3, et M4 comprend une alimentation en courant alternatif associée ALIM_AC1, ALIM_AC2, ALIM_AC3, et ALIM_AC4 qui génère typiquement une alimentation à 400hz et 115 V sur le bus d'alimentation primaire à courant alternatif.

Le réseau d'alimentation en énergie électrique comprend des unités de conditionnement d'énergie UCEN1, UCEN2, UCEN3, et UCEN4, et des boîtiers de distribution BD1 et BD2. Tous ces éléments sont reliés par des bus de données à haute vitesse par lesquels les commandes sont reçues et exécutées.

L'énergie d'alimentation alternative primaire délivrée par les alimentations en courant alternatif ALIM_AC1, ALIM_AC2, ALIM_AC3, et ALIM_AC4 est généralement convertie, au moyen de transformateurs et de redresseurs. Trois sortes de bus de puissance BECA, BECC1 et BECC2 relient les unités de conditionnement d'énergie UCEN1, UCEN2, UCEN3, et UCEN4, et les boîtiers de distribution BD1 et BD2. BECA représente un bus à courant alternatif typiquement à 400 Hz et de 115 V ou 230 V. BECC1 représente un bus d'énergie à courant continu typiquement de 28 V, et BECC2 représente un bus d'énergie à courant continu de haute tension typiquement de 270 V.

L'alimentation électrique est distribuée aux boîtiers de distribution BD1 et BD2, distants, localisés à proximité des équipements ou charges utiles EQT1, EQT2, EQT3, EQT4 et EQT5.

La redondance est assurée par le fait de lier chaque boîtier de distribution BD1, BD2 à chaque unité de conditionnement d'énergie UCEN1, UCEN2, UCEN3, et UCEN4.

L'utilisation de technologie à courants porteurs en ligne, permet d'éviter d'avoir deux réseaux séparés, l'un pour l'alimentation en énergie électrique des éléments, et l'autre pour les communications de données.

L'utilisation de courants porteurs en ligne permet de limiter drastiquement le nombre de connecteurs et de fils, ce qui permet de limiter sensiblement la masse et l'encombrement du harnais, par exemple embarqué dans un aéronef ou un satellite.

Le document " IPONS, A NEW CONCEPT FOR INTEGRATED POWER AND DATA DISTRIBUTION ONBOARD SATELLITES " (Oliver Scholz, Michael Gotsmann, Klaus Dostert, Matthias Gollor) illustre un mode de réalisation d'un réseau commun à l'alimentation en énergie électrique et à la communication de données pour un satellite.

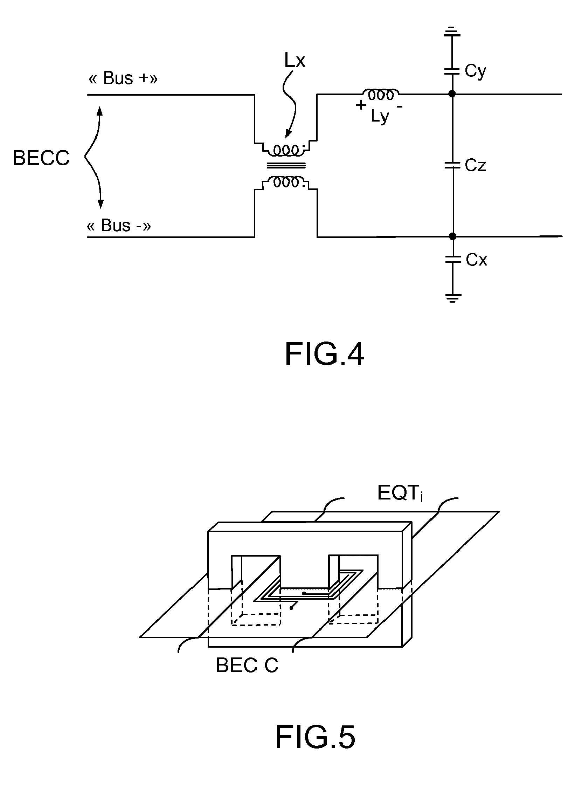

Toutefois, un tel mode de réalisation comprend des inductances de filtrage (section 4, figure 4.1) qui ont une masse et un encombrement importants.

Un but de l'invention est de proposer une alternative à un tel système, avec une masse et un encombrement diminués.

Il est proposé, selon un aspect de l'invention, un système à courants porteurs en ligne à bus d'énergie à courant continu, comprenant :
- une source d'alimentation en énergie;
- un moyen capacitif de lissage de la tension électrique délivrée par ladite source audit bus;
- au moins un boîtier de distribution alimenté par ledit bus et dédié à au moins un équipement; et
- un coupleur en courant électrique de signaux de hautes fréquences porteurs de données et un modem de données, liés audit boîtier de distribution et à au moins une ligne d'alimentation respective d'un équipement.

La présente invention permet de limiter drastiquement la masse et l'encombrement des équipements, en utilisant un même réseau pour l'énergie et les données, cela sans inductances de filtrage.

Dans un mode de réalisation, le bus d'énergie à courant continu est adapté pour fonctionner en mode différentiel et le système comprend un coupleur en tension électrique de signaux de hautes fréquences porteurs de données et un modem de données, disposés sur chaque ligne d'alimentation en aval dudit coupleur en courant électrique et en amont dudit équipement. En mode différentiel, un conducteur transporte le courant dans le sens aller, et un autre conducteur transporte le courant dans le sens retour.

Dans un autre mode de réalisation, le bus d'énergie à courant continu est adapté pour fonctionner en mode commun, et le système comprend un autre coupleur en courant électrique de signaux de hautes fréquences porteurs de données et un modem de données, disposés sur chaque ligne d'alimentation en aval du précédent coupleur en courant électrique et en amont dudit équipement. En mode commun, au moins deux conducteurs transportent le courant dans le sens aller, le courant en sens retour étant transmis par un élément du porteur du système à courants porteurs, tel un châssis conducteur pour un satellite.

Selon un mode de réalisation, une ligne d'alimentation respective d'un équipement comprend un coupleur en courant électrique de signaux de hautes fréquences porteurs de données et un modem de données, et un coupleur en tension électrique de signaux de hautes fréquences porteurs de données et un modem de données.

En cas de liaison point à point, en mode différentiel, entre un boîtier de distribution et un équipement, l'invention est particulièrement fiable, notamment pour un système embarqué à bord d'un aéronef ou d'un astronef tel un satellite.

Dans un mode de réalisation, une ligne d'alimentation respective d'un équipement comprend un coupleur en courant électrique de signaux de hautes fréquences porteurs de données et un modem de données, et un autre coupleur en courant électrique de signaux de hautes fréquences porteurs de données et un modem de données.

En cas de liaison point à point, en mode commun, entre un boîtier de distribution et un équipement, l'invention est particulièrement fiable, notamment pour un système embarqué à bord d'un aéronef ou d'un astronef tel un satellite.

Dans un mode de réalisation, ledit coupleur en tension électrique comprend un transformateur en tension électrique et un ou deux condensateurs de couplage formant une isolation galvanique entre ledit modem lié et ladite ligne d'alimentation dudit bus d'énergie.

L'utilisation d'un tel transformateur permet une isolation galvanique entre le modem de données et le bus d'énergie ou bus de puissance, en cas de problème avec les deux condensateurs de couplage. Il permet également de protéger le modem en cas de brusques périodes transitoires de courant sur le bus de puissance.

Selon un mode de réalisation, ledit coupleur en courant électrique est muni d'un circuit primaire comprenant deux pistes en cuivre ininterrompues.

On évite ainsi la présence de soudures qui créent des impédances parasites, ainsi que l'utilisation d'enroulements (bobines) qui modifient inévitablement l'impédance du bus de puissance.

Dans un mode de réalisation, le système comprend un autre coupleur en courant électrique en redondance et un modem de données redondant lié audit autre coupleur en courant électrique.

Ainsi, que l'on soit dans une liaison point-multipoints entre un boîtier de distribution et plusieurs équipements, ou dans une liaison point-à-point entre le boîtier de distribution et un équipement, en cas de panne du coupleur en courant électrique, le coupleur monté en redondance prend le relai.

Dans un mode de réalisation, ledit coupleur en courant est muni de plusieurs enroulements secondaires adaptés pour mesurer le courant continu consommé sur le circuit primaire par une technique de type 'fluxgate'.

Cette mesure est effectuée à l'aide d'une technique de type vanne de flux ou 'fluxgate' en langue anglaise. La technique 'fluxgate' consiste à utiliser un noyau magnétique présentant une forte saturation. Le courant continu à mesurer, injecté dans le circuit primaire, crée un flux magnétique continu dans ce noyau. Un courant variable, de forme bien choisie, par exemple deux sinusoïdes, est injecté dans un enroulement secondaire. Ce courant variable crée dans le noyau un flux magnétique variable qui se superpose au flux magnétique continu engendré par le courant à mesurer. Un autre enroulement secondaire est utilisé pour mesurer la forme de la variation de flux engendrée par les différents courants injectés dans les autres enroulements. Grâce à la caractéristique non-linéaire du noyau utilisé, cette forme dépend du niveau de courant continu injecté dans le circuit primaire, ce qui permet indirectement une mesure de ce courant.

Grâce à l'utilisation de la technique 'fluxgate' pour la mesure du courant continu consommé sur le circuit primaire, un gain de place est possible, car il est inutile de prévoir un autre dispositif dédié à cette fonction.

Selon un autre aspect de l'invention, il est également proposé un aéronef ou un astronef comprenant un système tel que décrit précédemment.

En l'espèce, pour un tel système intégré à un aéronef ou un astronef, il faut la présence de deux conducteurs de puissance entre le boitier de distribution BDi et les différents équipements EQTi. Les signaux CPL à haute fréquence doivent en effet être couplés en mode différentiel sur la ligne de puissance. Hors, il arrive dans certaines configurations d'aéronefs/astronefs qu'un seul conducteur de puissance soit utilisé pour relier les équipements au boitier de distribution. Dans ces systèmes, le courant de retour transite par le châssis de l'aéronef/astronef, auquel tous les équipements électriques sont reliés. Une variante de cette configuration, déjà couramment utilisée en pratique pour éviter des câbles en cuivre de section trop importante, et qui devra obligatoirement être utilisée pour être compatible avec la technique CPL, consiste à séparer le câble de puissance unique en au moins deux câbles de section plus petite transportant chacun une partie du courant de puissance. Le courant de retour continue à transiter par le châssis, et l'encombrement global n'est pas modifié vu qu'un câble de section 'S' est remplacé par deux câbles de section 'S/2'. Ces deux câbles sont alors utilisée en mode commun pour le transport de l'énergie électrique, et en mode différentiel pour le transport de données CPL. L'intérêt de limiter ainsi la section des câbles réside dans la diminution de rigidité qui en résulte, ainsi que dans la possibilité de partager les broches d'un même connecteur entre la distribution d'énergie et la distribution de signaux de communication de faible puissance : plusieurs broches sont alors affectées à la distribution d'énergie, chaque broche recevant ainsi un courant d'amplitude raisonnable. Cette configuration existe depuis de nombreuses années dans le domaine de la distribution d'énergie à bord des satellites.

Pour utiliser la technique CPL dans cette configuration particulière, un couplage en courant est nécessaire à chaque extrémité du bus de puissance : en effet, la mise en court-circuit des deux câbles de section S/2 au niveau du connecteur final empêche l'utilisation du couplage en tension.

Selon un autre aspect de l'invention, il est également proposé un véhicule terrestre ou naval comprenant un système tel que précédemment décrit.

L'invention sera mieux comprise à l'étude de quelques modes de réalisation décrits à titre d'exemples nullement limitatifs et illustrés par les dessins annexés sur lesquels :
- la figure 1 illustre schématiquement un satellite à bus d'énergie à courant continu, de l'état de la technique ;
- la figure 1a illustre un exemple classique d'architecture de réseau d'alimentation en énergie électrique d'un avion ;
- la figure 2 illustre un système point-à-multipoint, selon un aspect de l'invention ;
- la figure 3 illustre un système point-à-point, selon un aspect de l'invention ;
- la figure 3a illustre un système point-à-point avec redondance, selon un aspect de l'invention ;
- la figure 3b illustre un système avec couplage en courant de chaque côté du bus, adapté aux bus de puissance avec retour de courant par le châssis, selon un aspect de l'invention ;
- la figure 4 illustre un filtre en entrée d'un équipement ; et
- la figure 5 illustre un mode de réalisation dans lequel un coupleur en courant électrique est muni d'un circuit primaire comprenant deux pistes en cuivre ininterrompues.

Sur les différentes figures, les éléments ayant des références identiques sont identiques.

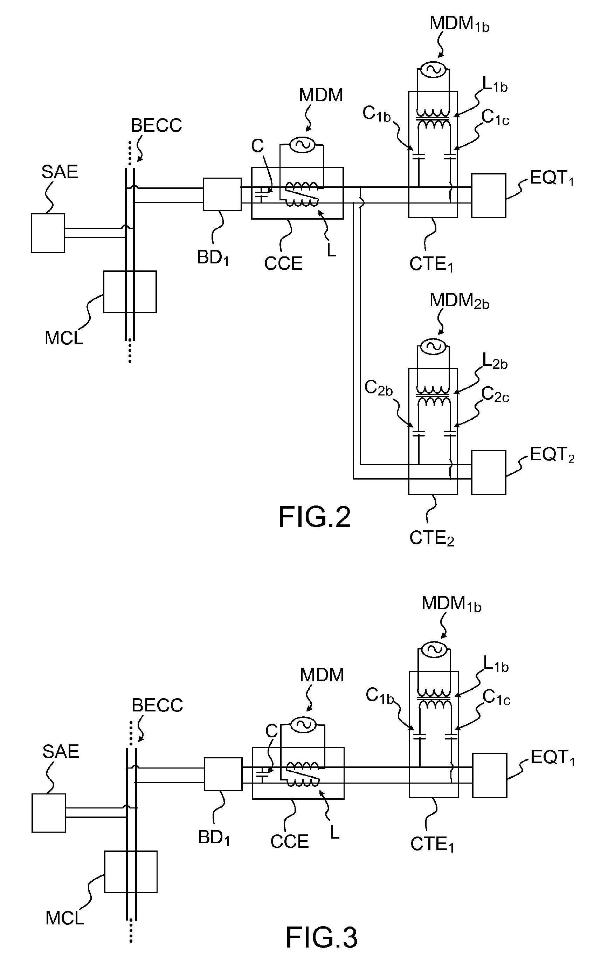

Sur la figure 2, est représenté un système à courants porteurs en ligne ou CPL à bus d'énergie à courant continu BECC. Un module capacitif de lissage MCL de la tension électrique délivrée par une source d'alimentation en énergie SAE, au bus d'énergie à courant continu BECC. Le module capacitif de lissage MCL, peut, par exemple, comprendre des condensateurs montés en série. Le bus d'énergie à courant continu BECC aliment un boîtier de distribution BD₁. En variante, le système peut comprendre une pluralité de boîtiers de distribution similaires au boîtier BD₁.

Le boîtier de distribution BD₁ alimente, par une portion commune de ligne d'alimentation, comprenant un coupleur en courant électrique CCE de signaux de hautes fréquences porteurs de données et un modem de données MDM. Sur cet exemple, le coupleur en courant électrique CCE comprend un condensateur C et une inductance L.

En sortie du coupleur en courant électrique CCE, deux lignes d'alimentations dérivées alimentent respectivement un premier équipement EQT₁ et un deuxième équipement EQT₂. La ligne d'alimentation dérivée alimentant le premier équipement EQT₁ comprend, en amont du premier équipement EQT₁, un coupleur en tension électrique CTE₁ de signaux de hautes fréquences porteurs de données et un modem de données MDM_{1b}. De même, la ligne d'alimentation dérivée alimentant le deuxième équipement EQT₂ comprend, en amont du deuxième équipement EQT₂, un coupleur en tension électrique CTE₂ de signaux de hautes fréquences porteurs de données et un modem de données MDM_{2b}.

Le coupleur en tension électrique CTE₁ de signaux de hautes fréquences porteurs de données, comprend deux condensateurs respectifs C_{1b} et C_{1c}, et une inductance L_{1b}. De manière similaire, le coupleur en tension électrique CTE₂ de signaux de hautes fréquences porteurs de données, comprend deux condensateurs respectifs C_{2b} et C_{2c}, et une inductance L_{2b}

On a donc une distribution point à multipoint.

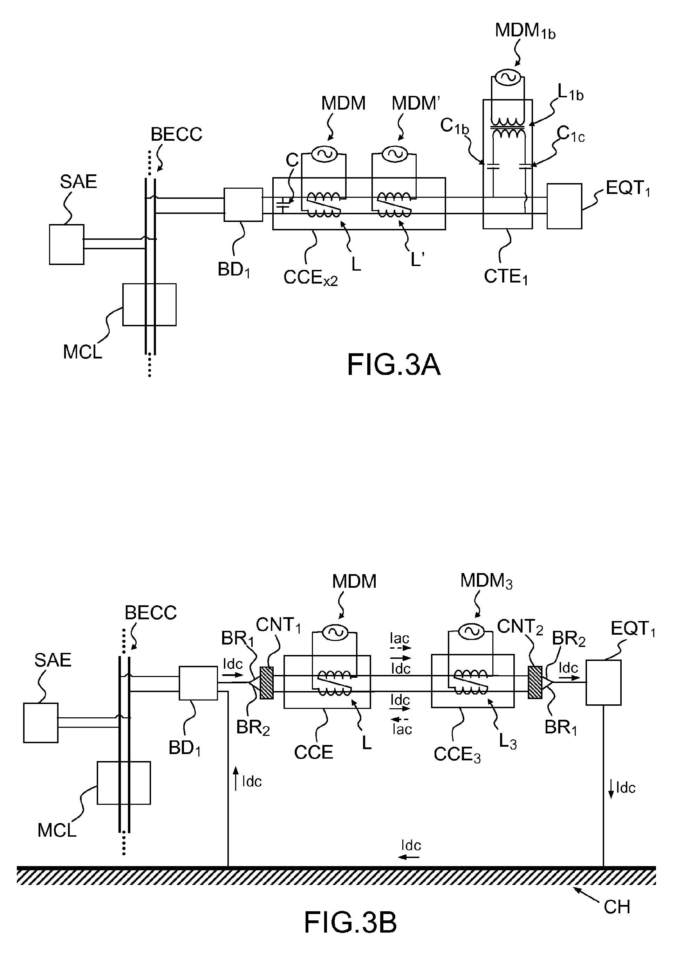

La figure 3 illustre un autre mode de réalisation point à point entre le boîtier d'alimentation BD1 et l'équipement EQT₁. Bien entendu cette liaison point à point peut être présente en grand nombre de manière dupliquée. Ainsi un tel système est en alimentation et communication point à point, ce qui limite les risques de propagation de pannes multiples.

La figure 3a illustre une variante du mode de réalisation point à point entre le boîtier d'alimentation BD1 et l'équipement EQT₁ pour laquelle le coupleur en courant électrique CCEₓ₂ est redondant dans le sens où il comprend deux inductances de couplage L et L', ainsi que deux modems de données MDM et MDM'. Ce mode redondant peut naturellement aussi être appliqué dans le cas d'une réalisation point à multipoint.

La figure 3b illustre le système tel qu'il doit être implémenté lors de l'utilisation d'un bus d'énergie à courant continu en mode commun, avec retour du courant continu par le châssis CH. Entre le connecteur CNT₁ du boitier de distribution BD₁ et le connecteur CNT₂ de l'équipement EQT₁, représentés sur cette figure, le conducteur est séparé en deux brins BR₁, BR₂ de section plus petite. Le courant continu I_{dc} circule dans le même sens au sein de ces deux brins BR₁, BR₂, puis revient par le châssis CH. Un modem de données MDM et un coupleur en courant CCE sont utilisés du côté du boitier de distribution BD₁. Un autre modem de données MDM₃ et un autre coupleur en courant CCE₃ (comprenant une inductance L₃) sont utilisés du côté de l'équipement EQT₁. Les signaux de hautes fréquences porteurs de données I_{ac} circulent en mode différentiel sur les deux conducteurs, dans la partie du circuit limitée par les deux connecteurs CNT₁, CNT₂. En sortie du connecteur CNT₂, les deux brins, ou branches BR₁, BR₂, se rejoignent en amont de l'équipement EQT₁.

Dans les différents équipements EQTᵢ cités précédemment, un filtre d'entrée, tel que représenté sur la figure 4 est présent pour filtrer les signaux de hautes fréquences.

L'inductance Lₓ et les condensateurs Cₓ et C_{y} assurent le filtrage en mode commun, i.e. empêchent les signaux de hautes fréquences générés en mode commun sur les bus d'alimentation BECC d'entrer dans l'équipement EQTᵢ ou charge utile, et vice-versa. L'inductance L_{y} et le condensateur C_{z} assurent le filtrage en mode différentiel, i.e. ils agissent comme un filtre passe-bas pour les signaux de hautes fréquences entre le bus d'alimentation BECC et l'équipement EQTᵢ.

L'invention propose un couplage asymétrique, dans le cas d'un bus d'énergie en mode différentiel, ou symétrique, dans le cas d'un bus d'énergie en mode commun, et un mode de réalisation avantageux point à point. En effet, dans le mode de réalisation point à point, les signaux sont isolés entre les différentes lignes des équipements EQTᵢ, ce qui limite drastiquement les problèmes de fiabilité, car un problème sur un équipement est décorrélé du fonctionnement des autres équipements.

Comme illustré sur la figure 5, le coupleur en courant électrique CCE est muni d'un circuit primaire comprenant deux pistes en cuivre ininterrompues. Cela limite la présence de soudures et bobinages, et des impédances parasites associées. Le coupleur en courant électrique CCE est également muni d'un noyau en ferrite autour duquel se trouve un enroulement secondaire relié au modem CPL.

Les systèmes à courants porteurs en ligne de l'état de la technique comprennent généralement un boîtier de distribution, dans lequel ont lieu des mesures de courant électrique pour surveiller la consommation de la charge, et dans lequel est présent un fusible limiteur de courant respectif d'un équipement pour éviter qu'une panne d'un équipement ne court-circuite tout ou partie du système, notamment dans un satellite, une fusée ou un avion.

Dans la présente invention, l'enroulement secondaire du coupleur en courant électrique, peut être utilisé pour mesurer le courant primaire en utilisant une technique de type 'fluxgate', et ainsi l'espace occupé par l'équipement de mesure classique du boîtier de distribution peut être récupéré.

On limite ainsi le volume utilisé, et le coût qui en découle, notamment dans les domaines spatial et aéronautique.

## Revendications

1. Système à courants porteurs en ligne à bus d'énergie à courant continu (BECC), comprenant :
- une source d'alimentation en énergie (SAE);
- un moyen capacitif de lissage (MCL) de la tension électrique délivrée par ladite source (SAE) audit bus (BECC);
- au moins un boîtier de distribution (BD₁) alimenté par ledit bus (BECC) et dédié à au moins un équipement (EQT₁, EQT₂);
**caractérisé en ce qu'**il comprend un coupleur en courant électrique (CCE) de signaux de hautes fréquences porteurs de données et un modem de données (MDM), liés audit boîtier de distribution (BD₁) et à au moins une ligne d'alimentation respective d'un équipement (EQT₁, EQT₂).

2. Système selon la revendication 1, dans lequel le bus d'énergie à courant continu (BECC) est adapté pour fonctionner en mode différentiel, et comprend un coupleur en tension électrique (CTE₁, CTE₂) de signaux de hautes fréquences porteurs de données et un modem de données (MDM_{1b}, MDM_{2b}), disposés sur chaque ligne d'alimentation en aval dudit coupleur en courant électrique (CCE) et en amont dudit équipement.

3. Système selon la revendication 1, dans lequel le bus d'énergie à courant continu (BECC) est adapté pour fonctionner en mode commun et comprend un autre coupleur en courant électrique (CCE₃) de signaux de hautes fréquences porteurs de données et un modem de données (MDM₃), disposés sur chaque ligne d'alimentation en aval du précédent coupleur en courant électrique (CCE) et en amont dudit équipement.

4. Système selon la revendication 2, dans lequel une ligne d'alimentation respective d'un équipement (EQT₁) comprend un coupleur en courant électrique (CCE) de signaux de hautes fréquences porteurs de données et un modem de données (MDM), et un coupleur en tension électrique (CTE₁) de signaux de hautes fréquences porteurs de données et un modem de données (MDM_{1b}).

5. Système selon la revendication 3, dans lequel une ligne d'alimentation respective d'un équipement (EQT₁) comprend un coupleur en courant électrique (CCE) de signaux de hautes fréquences porteurs de données et un modem de données (MDM), et un autre coupleur en courant électrique (CCE₃) de signaux de hautes fréquences porteurs de données et un modem de données (MDM3).

6. Système selon l'une des revendications précédentes, dans lequel ledit coupleur en tension électrique (CTE₁) comprend un transformateur en tension électrique et un ou deux condensateurs de couplage formant une isolation galvanique entre ledit modem lié (MDM_{1b}) et ladite ligne d'alimentation dudit bus d'énergie (BECC).

7. Système selon l'une des revendications précédentes, dans lequel ledit coupleur en courant électrique est muni d'un circuit primaire comprenant deux pistes en cuivre ininterrompues.

8. Système selon l'une des revendications précédentes, comprenant un autre coupleur en courant électrique en redondance et un modem de données redondant (MDM') lié audit autre coupleur en courant électrique.

9. Système selon l'une des revendications précédentes, dans lequel ledit coupleur en courant est muni d'enroulements secondaires adaptés pour mesurer le courant continu consommé sur le circuit primaire par une technique de type 'fluxgate'.

10. Aéronef ou astronef comprenant un système selon l'une des revendications précédentes.

11. Véhicule terrestre ou naval comprenant un système selon l'une des revendications précédentes.
